# EUROPEAN PATENT APPLICATION

(11) **EP 4 826 166 A1**
(43) Date of publication of application: **21.10.2026**
(21) Application number: 23961602.2
(22) Date of filing: 14.12.2023
(51) Int. Cl.: E02F 3/43, E02F 9/26, E02F 9/20, E02F 9/24

(54) **METHOD AND SYSTEM FOR CONTROLLING EXCAVATOR**

(71) Applicant: Volvo Construction Equipment AB, 631 85 Eskilstuna (SE)
(72) Inventor: KIM, Jiyun, Changwon-si, Gyeongsangnam-do 51710 (KR)
(74) Representative: Kransell & Wennborg KB
(86) International application number: PCT/KR2023/020611
(87) International publication number: WO 2025/127201

(57) **Abstract**

One aspect of the present disclosure provides a method for controlling an excavator in order to automatically perform a dumping motion of a bucket for loading an object, the method comprising the steps of: selecting and activating, by a display controller, an automatic dumping motion function; detecting, by a receiving unit, a load receiver and acquiring information necessary for performing the automatic dumping motion; and performing, by a control unit, a first automatic dumping motion such that the object in the bucket is loaded on the load receiver on the basis of the acquired information.

## Description

### Technical Field

The present disclosure generally relates to a method and system for controlling an excavator. In certain aspects, the present disclosure relates to a method and system for controlling a dumping motion such that loading of a target object onto a load receiver may be efficiently performed. The present disclosure may be applied to heavy vehicles such as trucks, buses, and construction equipment, among other types of vehicles. Although the present disclosure may be described with respect to a particular vehicle, the present disclosure is not limited to any specific vehicle.

### Background Art

An excavator is construction machinery that performs various operations, such as an excavation operation for digging ground at construction sites and the like, a loading operation for transporting excavated soil and loading the excavated soil onto a load receiver, a trenching operation for forming a foundation, a crushing operation for demolishing buildings, a grading operation for leveling ground surfaces, and a leveling operation for flattening ground surfaces.

The excavator may generally include a lower traveling body configured to provide movement of equipment, an upper swing body rotatably mounted on the lower traveling body, and an operation device (for example, a boom, an arm, and a bucket) mounted on a front portion of the upper swing body.

In such an excavator, an excavation operation, a loading operation, and the like are generally controlled by manual manipulation of an operator, and there is a problem in that operation is complicated and driving skills vary among individual operators, such that excavation and loading results are differently achieved depending on the operator.

Accordingly, there is an increasing demand for autonomous excavation and loading technology capable of solving the above problems and accurately determining excavation and loading trajectories.

### Summary of the Invention

### Technical Problem

The target object of the present disclosure is to provide a method and system for automatically controlling a dumping motion such that loading of a target object onto a load receiver may be efficiently performed.

### Technical Solution

A first aspect of the present disclosure provides a method of controlling an excavator to automatically perform a dumping motion of a bucket for loading a target object, the method including: a step for activating an automatic dumping motion function by selecting the automatic dumping motion function in a display controller; detecting, by a receiving unit, a load receiver and a step for acquiring information required to perform the automatic dumping motion; and a step for performing, by a controller, a first automatic dumping motion to load the target object contained in the bucket into the load receiver based on the acquired information.

Optionally, in some examples including at least one preferred example, a method of controlling an excavator, in which the step of performing the first automatic dumping motion includes calculating, based on a center of a rotational axis of the bucket, a first dumping point (Xd1, Yd1, Zr1) as a loading start position and a second dumping point (Xd2, Yd2, Zr2) as a loading completion position, establishing path planning for the boom, arm, bucket, and upper swing body from the first dumping point (Xd1, Yd1, Zr1) to the second dumping point (Xd2, Yd2, Zr2), including a velocity command, calculating one or more among target rotation angles of the boom, arm, and bucket and a target swing angle of the upper swing body based on the path planning, and moving one or more among the boom, arm, and bucket to perform the automatic dumping motion function, or swinging the upper swing body while moving one or more among the boom, arm, and bucket based on the target rotation angles and the target swing angle.

Optionally, in some examples that include at least one preferred example, the method of controlling an excavator may further include the step for, after the first automatic dumping motion, performing, by the controller, a second automatic dumping motion to evenly load the target object in the load receiver.

Optionally, in some examples including at least one preferred example, a method of controlling an excavator, in which the step of performing the second automatic dumping motion includes detecting, at a receiving unit, the volume of the target object loaded into the load receiver by the first automatic dumping motion for each section, determining a compensated value for each section based on the detected volume of the target object for each section, calculating a compensated velocity command for each section by applying the compensated value to the velocity command of the first automatic dumping motion, and establishing a path planning for the boom, arm, bucket, and upper swing body from the first dumping point to the second dumping point including the compensated velocity command.

Optionally, a method for controlling an excavator, wherein, with respect to any one section, when a volume of the target object in the corresponding section is smaller than an average of the volumes of the target object in respective sections, the compensated velocity command in the corresponding section is smaller than the velocity command in the first automatic dumping motion, and when the volume of the target object in the corresponding section is greater than the average of the volumes of the target object in respective sections, the compensated velocity command in the corresponding section is greater than the velocity command in the first automatic dumping motion.

Optionally, in some examples including at least one preferred example, a compensated value for each section, C(i), is determined according to [Equation 1] below, and a compensated velocity command for each section, VCcom(i), is determined according to [Equation 2] below, in a method for controlling an excavator.

[Equation 1] $C \left(i\right) = 1 - \frac{VL \left(i\right)}{VLaverage}$

[Equation 2] $VCcom \left(i\right) = \left(1-C\left(i\right)\right) ⋅ VC \left(i\right)$

Here, VL(i) is a volume of the target object in section i, VLaverage is an average of the volumes of the target object in respective sections, and VC(i) is a velocity command in section i during the first automatic dumping motion.

Optionally, in some examples including at least one preferred example, the method for controlling an excavator may further include a step for determining, by a controller, whether a center of a rotational axis of the bucket has reached the second dumping point.

Optionally, in some examples including at least one preferred example, in the determining step of whether the center of the rotational axis of the bucket has reached the second dumping point, when it is determined that the second dumping point has been reached within a preset time, completion of an automatic dumping motion function is displayed on the display controller, and when it is determined that the second dumping point has not been reached within the preset time, the same is regarded as an error and displayed on the display controller, wherein the automatic dumping motion function is performed until the second dumping point is reached, in a method for controlling an excavator.

A second aspect of the present disclosure provides a system for controlling an excavator to automatically perform a dumping motion of a bucket for loading a target object, the system including: a driving unit including a boom, an arm, a bucket, and an upper swing body; a receiving unit configured to detect a load receiver and acquire information required to perform an automatic dumping motion function; an input/output interface configured to receive a user input or output information, wherein the input/output interface activates the automatic dumping motion function and includes a display controller configured to display the information acquired by the receiving unit; and a controller configured to perform a first automatic dumping motion function by controlling the driving unit to load the target object contained in the bucket onto the load receiver based on the acquired information.

Optionally, in some examples including at least one preferred example, the controller may calculate, based on a center of a rotational axis of the bucket, a first dumping point (Xd1, Yd1, Zr1), which is a loading start position, and a second dumping point (Xd2, Yd2, Zr2), which is a loading completion position, establish a path planning for a boom, an arm, a bucket, and an upper swing body from the first dumping point (Xd1, Yd1, Zr1) to the second dumping point (Xd2, Yd2, Zr2) including a velocity command, calculate, based on the path planning, one or more among target rotation angles of the boom, the arm, and the bucket, and a target swing angle of the upper swing body, and, based on the target rotation angle and the target swing angle, move one or more of the boom, the arm, and the bucket to perform an automatic dumping motion function, or swing the upper swing body while moving one or more of the boom, the arm, and the bucket, in a system for controlling an excavator.

Optionally, in some examples including at least one preferred example, the controller may perform a second automatic dumping motion after the first automatic dumping motion in order to evenly load the target object onto the load receiver, in a system for controlling an excavator.

Optionally, in some examples including at least one preferred example, the receiving unit may detect, for each section, a volume of the target object loaded onto the load receiver by the first automatic dumping motion, and the controller may determine a compensated value for each section based on the detected volume of the target object for each section, calculate a compensated velocity command for each section by applying the compensated value to the velocity command in the first automatic dumping motion, and establish a path planning for a boom, an arm, a bucket, and an upper swing body from the first dumping point to the second dumping point including the compensated velocity command, in a system for controlling an excavator.

Optionally, a system for controlling an excavator, wherein, with respect to any one section, when a volume of the target object in the corresponding section is smaller than an average of the volumes of the target object in respective sections, the compensated velocity command in the corresponding section is smaller than the velocity command in the first automatic dumping motion, and when the volume of the target object in the corresponding section is greater than the average of the volumes of the target object in respective sections, the compensated velocity command in the corresponding section is greater than the velocity command in the first automatic dumping motion.

Optionally, in some examples including at least one preferred example, a compensated value for each section, C(i), is determined according to [Equation 1] below, and a compensated velocity command for each section, VCcom(i), is determined according to [Equation 2] below, in a system for controlling an excavator.

[Equation 1] $C \left(i\right) = 1 - \frac{VL \left(i\right)}{VLaverage}$

[Equation 2] $VCcom \left(i\right) = \left(1-C\left(i\right)\right) ⋅ VC \left(i\right)$

Here, VL(i) is a volume of the target object in section i, VLaverage is an average of the volumes of the target object in respective sections, and VC(i) is a velocity command in section i during the first automatic dumping motion.

### Effect of the Invention

According to the present disclosure, the method and system for controlling an excavator according to the present disclosure may improve work efficiency and driver convenience by automatically performing the dumping motion of the bucket for dumping the target object.

Effects of the present disclosure are not limited to the effects described above, and it should be understood that the effects include all effects inferable from the configuration of the disclosure described in the detailed description or the claims of the present disclosure.

The disclosed aspects, embodiments (including any preferred embodiments), and/or accompanying claims may be appropriately combined with one another, as will be apparent to those skilled in the art.

Additional features and advantages are disclosed in the following description, claims, and drawings, and will in part be readily apparent to those skilled in the art or recognized by practicing the disclosure as described herein.

### Brief Description of the Drawings

Hereinafter, examples will be described in greater detail with reference to the accompanying drawings.
FIG. 1 is a view illustrating a driving unit of an excavator according to one aspect of the present disclosure.
FIG. 2 is a block diagram schematically illustrating a configuration of a system for controlling an excavator according to one aspect of the present disclosure.
FIGS. 3 to 5 are flowcharts illustrating a method for controlling an excavator according to an embodiment.
FIG. 6 is a view illustrating information of a load receiver required to perform an automatic dumping motion function according to an embodiment.
FIGS. 7 and 8 are conceptual diagrams illustrating a movement trajectory of a bucket performing an automatic dumping motion function according to an embodiment.
FIG. 9 is a view for explaining a step for calculating a dumping point according to an embodiment.
FIG. 10 is a view for explaining a step of calculating a swing angle according to an embodiment.
FIG. 11 is a view illustrating a target object loaded onto a load receiver after a step for performing a first automatic dumping motion according to an embodiment.
FIGS. 12(a) to (c) are views for explaining a step for detecting, for each section, a volume of a target object loaded onto a load receiver in a step of performing a second automatic dumping motion according to an embodiment.
FIGS. 13(a) to (c) are views for explaining an operation of determining a compensated value for a velocity command in a step of performing a second automatic dumping motion according to an embodiment.
FIGS. 14(a) and (b) are views illustrating a velocity command to which a compensated value is applied according to an embodiment.

### Detailed Description of the Invention

The detailed description set forth below provides information and examples of the disclosed technology in sufficient detail to enable those skilled in the art to implement the present disclosure. However, the present disclosure may be implemented in various different forms, and thus is not limited to the aspects described herein. Further, in the drawings, portions unrelated to the description have been omitted in order to clearly describe the present disclosure, and like reference numerals designate like parts throughout the specification.

The terms used herein are merely for describing specific aspects and are not intended to limit the present disclosure. As used herein, singular forms are intended to include plural forms as well, unless the context clearly indicates otherwise. As used herein, the term "and/or" includes all combinations of one or more among the related listed items. As used herein, the terms "comprises" and "comprising" specify the presence of stated features, integers, steps, operations, elements, and/or components, but do not preclude the presence or addition of one or more other functions, integers, steps, operations, elements, components, and/or groups thereof.

It will be understood that terms such as first and second may be used herein to describe various elements, but such elements should not be limited by these terms. These terms are used only to distinguish one element from another element. For example, a first component may be referred to as a second component without departing from the scope of rights of the present disclosure, and similarly, a second component may also be referred to as a first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different directions of the apparatus in addition to the directions illustrated in the drawings. When a component is described as being "connected" or "coupled" to another component, it will be understood that the component may be directly connected or coupled to the other component, or may be connected or coupled via one or more intervening components. In contrast, when an element is described as "directly connected" or "directly coupled" to another element, no intervening element exists therebetween.

Unless otherwise defined, all terms (including technical and scientific terms) used herein have the same meanings as commonly understood by those having ordinary skill in the art to which the present disclosure pertains. It should be further understood that terms used herein should be construed as having meanings consistent with their meanings in the context of the present specification and the related art, and should not be construed in an idealized or overly formal sense unless expressly defined herein.

Hereinafter, one aspect of the present disclosure will be described in detail with reference to the accompanying drawings.

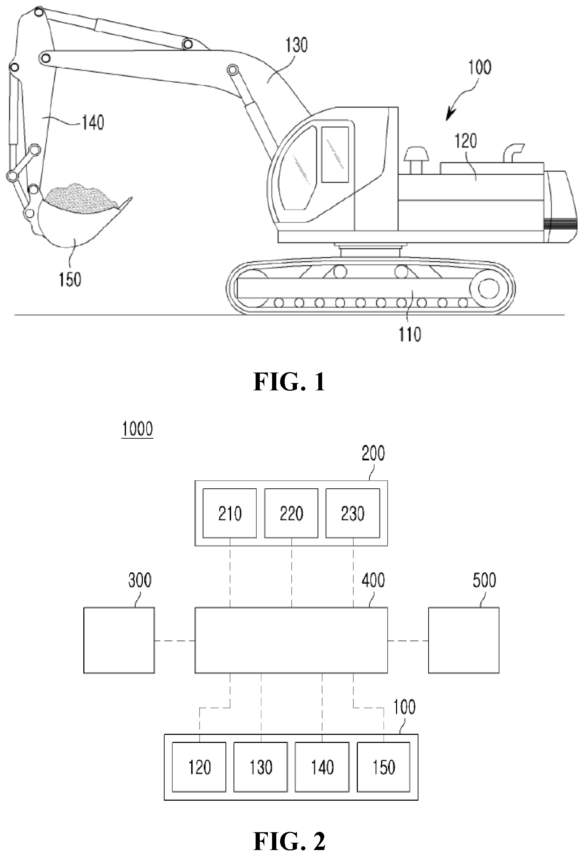

FIG. 1 is a view illustrating a driving unit of an excavator according to one aspect of the present disclosure, and FIG. 2 is a block diagram schematically illustrating a configuration of a system for controlling an excavator according to one aspect of the present disclosure.

Referring to FIGS. 1 and 2, an excavator is a device capable of excavating a target object and may include various types of excavators capable of performing excavation operations in various manners, for example, earth hauling operations, building demolition operations, ground grading operations, and the like.

In an embodiment, the excavator may be implemented to include a computing device operating through a computer program for realizing functions described herein, and in another embodiment, may be controlled according to a control signal of a controller.

A system (1000) for controlling an excavator to automatically perform a dumping motion of a bucket for loading a target object according to one aspect of the present disclosure includes a driving unit (100), a receiving unit (200), a display controller (300), a controller (400), and a manipulation unit (500).

The driving unit (100) includes an upper swing body (120) supported to be swingable on a lower traveling body (110), and an operation device connected to the upper swing body (120). The operation device may include, for example, a boom (130), an arm (140), and a bucket (150).

The lower traveling body (110) is configured to support loads of the upper swing body (120), the boom (130), the arm (140), and the bucket (150), and simultaneously move the excavator in a forward-rearward direction or a left-right direction for an operation purpose.

The upper swing body (120) is configured to be supported on the lower traveling body (110), and is designed to swing on the lower traveling body (110) by a swing device including a swing motor, a swing reduction gear, and the like.

The arm (140) is connected to the bucket (150) and the boom (130), respectively, and in an embodiment, is connected through joints in an order of the boom (130), the arm (140), and the bucket (150) from the upper swing body (120), and each joint may move by a hydraulic cylinder.

For example, the arm (140) is connected, at one end thereof, to the boom (130) connected to the upper swing body (120) of the excavator, and connected, at another end thereof, to the bucket (150), and each of the boom (130), the arm (140), and the bucket (150) may rotate about one or more axes by a boom cylinder, an arm cylinder, and a bucket cylinder, respectively, and the bucket (150) may contain therein a target object (for example, soil) on the ground according to rotation thereof, and the controller (400) may control the overall operation thereof.

Since the boom (130), the arm (140), and the bucket (150) are installed supported on the upper swing body (120) facing forward, when the upper swing body (120) swings, the boom (130), the arm (140), and the bucket (150) swing together with the upper swing body (120).

The driving unit (100) may be configured as, for example, an electro-hydraulic system, and driving thereof may be electronically controlled by the controller (400).

The receiving unit (200) is configured to acquire various types of information required to perform an automatic dumping motion function.

For example, the receiving unit (200) may include inertial measurement units (IMUs) (210), a swing angle sensor (220), and environment perception sensors (230), but is not limited thereto.

The inertial measurement units (IMUs) (210) are configured to measure one or more of displacement, position, and/or posture of one or more among the upper swing body (120), the boom (130), the arm (140), and the bucket (150) constituting the driving unit (100). For example, inertial measurement units (210) configured to respectively detect displacements of the boom (130), the arm (140), and the bucket (150) and output detection signals to the controller (400) may be installed on a boom cylinder, an arm cylinder, and a bucket cylinder such that angles of the boom (130), the arm (140), and the bucket (150), which operate during an automatic loading-position reaching function, may be calculated.

The swing angle sensor (220) is configured to measure a swing angle of the upper swing body (120). That is, a swing angle sensor (220) configured to detect a swing angle of the upper swing body and output a detection signal to the controller (400) may be installed on the upper swing body (120).

The environment perception sensors (230) are configured for detecting an external environment and may include one or more terrain detecting sensors such as a camera, a radar, and a lidar. Through the environment perception sensors (230), information regarding a shape and/or a position of a load receiver (for example, a dump truck, a hopper, or a crusher), an amount and/or a shape and/or a position of an excavation target object contained in a bucket, an amount and/or a shape and/or a position of the excavation target object loaded onto the load receiver, an amount and/or a shape and/or a position of an excavation target object in an external environment, a shape and/or a position of an obstacle located within a maximum swing radius, and the like may be identified and measured.

The receiving unit (200) may acquire information required to perform an automatic dumping motion function, for example, information regarding terrain including a target object, displacement and/or angle and/or position information of the driving unit, shape and/or position information of a load receiver, amount and/or shape and/or position information of an excavation target object loaded onto the load receiver, and the like. Here, the target object is an excavation target of the excavator and may include any type of target material loadable or transportable by the excavator, for example, soil in an earth hauling operation, building debris in a building demolition operation, ground crushed material in a ground grading operation, and the like.

The receiving unit (200) may receive information required to perform an automatic dumping motion function from another device (for example, a server) or another component (for example, a memory, a sensor, and the like), and may include, for example, a wired/wireless communication device connected to another device through a network and capable of transmitting and receiving various types of information described throughout the specification.

The receiving unit (200) may generate, in real time, information required to perform an automatic dumping motion function through sensing of the information. For example, the receiving unit (200) may sense, in real time through one or more terrain detecting sensors such as a camera, a radar, and a lidar, information including a position and a size of a target object (for example, soil) within a target area changing in real time as the boom (130), the arm (140), or the bucket (150) of the excavator moves, a type of surrounding terrain, an angle between the target object and the surrounding terrain, a shape or a position of a load receiver, a shape or a position of an obstacle, and the like.

The display controller (300) is an input/output interface for receiving a user input or outputting information. The display controller (300) activates an automatic dumping motion function and displays, on a display, information acquired by the receiving unit (200) (for example, a position of a load receiver, and an amount and a shape of an excavation target object loaded onto the load receiver). That is, an operator may select an automatic dumping motion function through the display controller (300) to activate or deactivate the automatic dumping motion function. For example, an operator may activate or deactivate an automatic dumping motion function by selecting the automatic dumping motion function on a screen of the display controller (300) providing a touchscreen function.

The manipulation unit (500) may be a hydraulic joystick or an electric joystick, and preferably may be an electric joystick configured to generate an electrical signal proportional to an amount of manipulation by an operator and provide the electrical signal to the controller (400).

The manipulation unit (500) may include an input unit configured to receive a user input for starting an automatic dumping motion function, for example, a button. Accordingly, an operator may activate an automatic dumping motion function by selecting the automatic dumping motion function on the display controller (300), and may start the automatic dumping motion function by pushing a button of the manipulation unit (500).

The controller (400) processes information acquired by the receiving unit (200), signals from the display controller (300) and the manipulation unit (500), and the like to control the driving unit (100) such that a desired operation may be automatically performed.

The controller (400) performs an automatic dumping motion function by controlling the driving unit (100) to load a target object contained in the bucket (150) onto a load receiver based on information acquired by the receiving unit (200).

The controller (400) calculates, based on a center of a rotational axis of the bucket (150), a first dumping point (Xd1, Yd1, Zr1), which is a loading start position, and a second dumping point (Xd2, Yd2, Zr2), which is a loading completion position, establishes path planning for the boom (130), the arm (140), the bucket (150), and the upper swing body (120) from the first dumping point (Xd1, Yd1, Zr1) to the second dumping point (Xd2, Yd2, Zr2) including a velocity command, calculates, based on the path planning, one or more target rotation angles of the boom (130), the arm (140), and the bucket (150), and a target swing angle of the upper swing body (120), and, based on the target rotation angle and the target swing angle, moves one or more among the boom (130), the arm (140), and the bucket (150) to perform an automatic dumping motion function, or swings the upper swing body (120) while moving one or more among the boom (130), the arm (140), and the bucket (150).

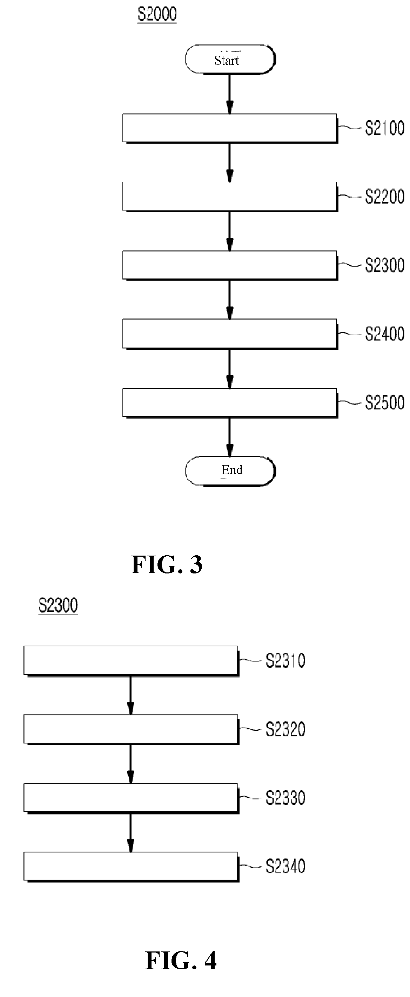

The above-described series of operations will be described below in detail with reference to FIGS. 3 to 14.

Throughout the specification, it will be understood by those of ordinary skill in the art that, in addition to the components shown in FIGS. 1 and 2, the excavator may further include other general-purpose components. For example, the excavator may further include various types of actuators for moving the boom (130), the arm (140), and the bucket (150), a drive control module for detailed control of the actuators, pipes, and a memory for storing data used throughout the operations.

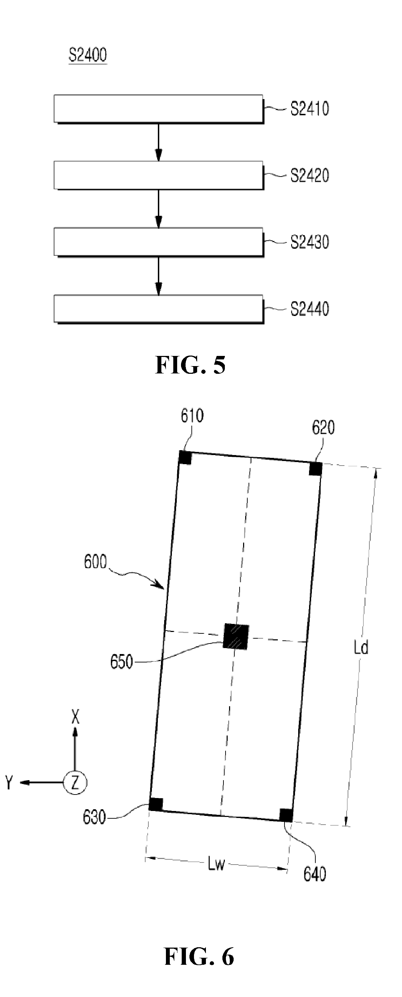

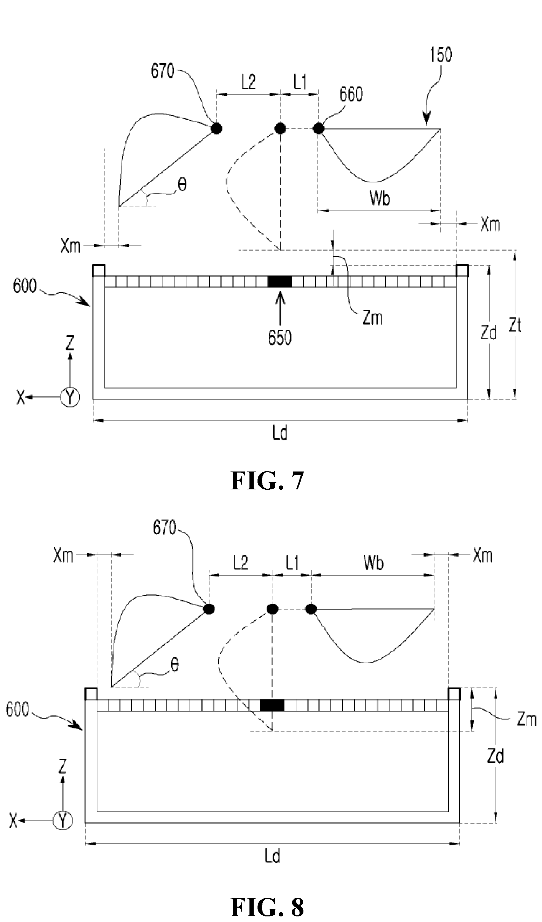

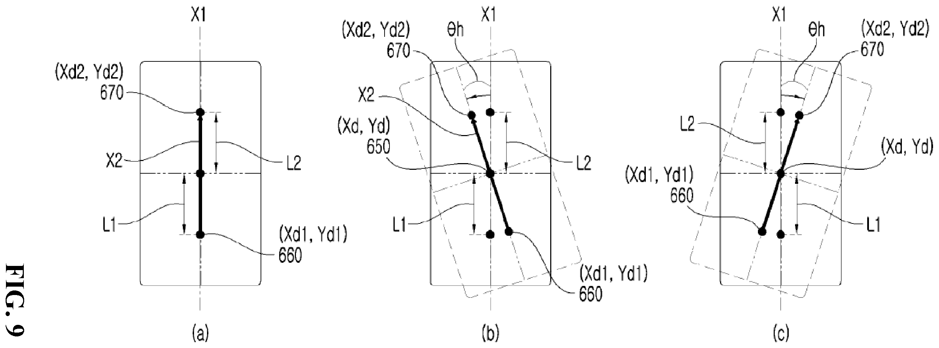

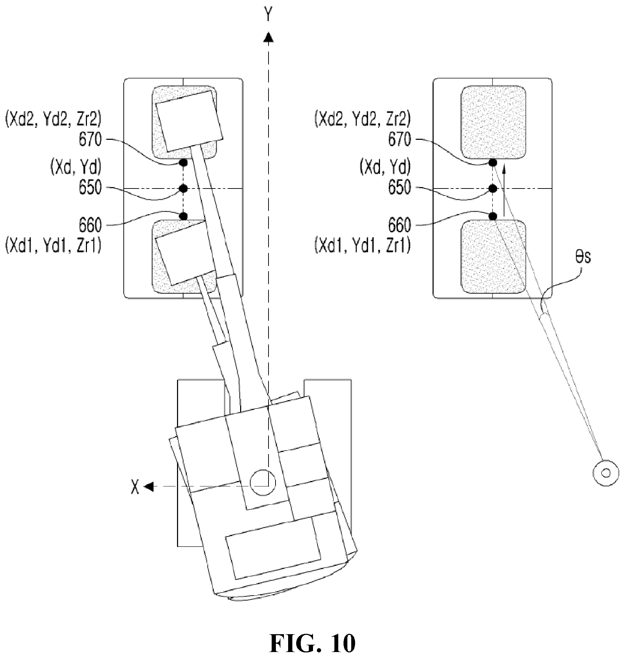

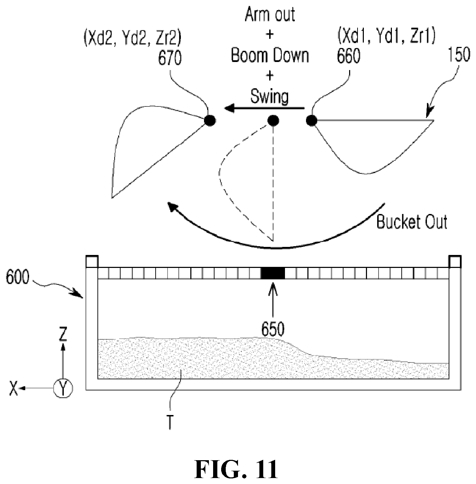

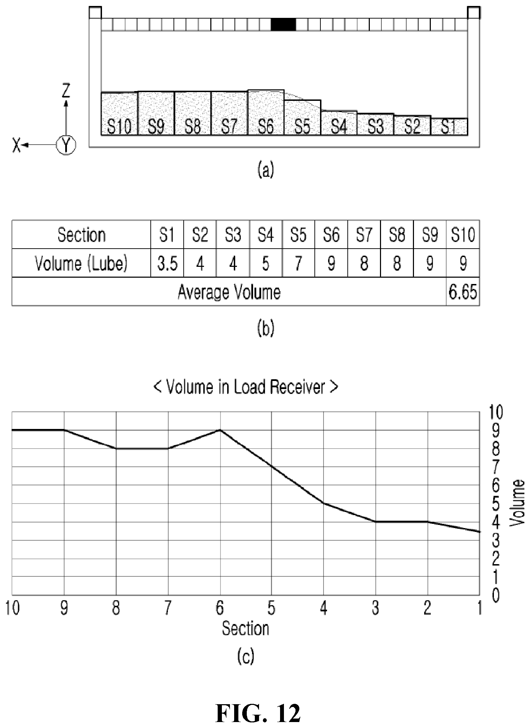

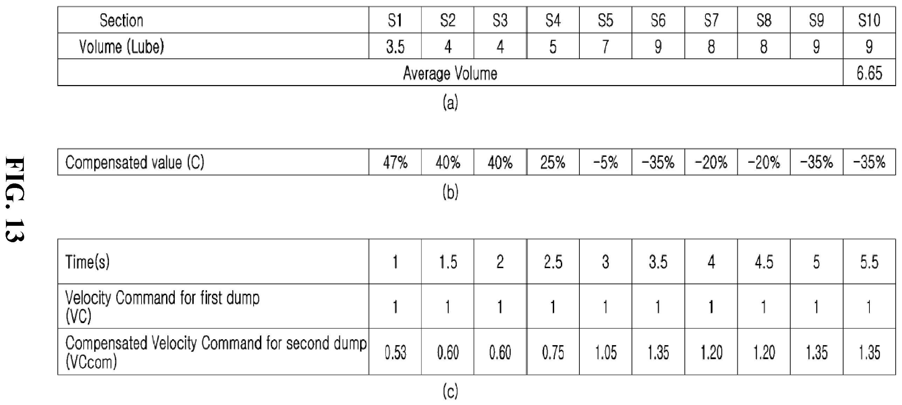

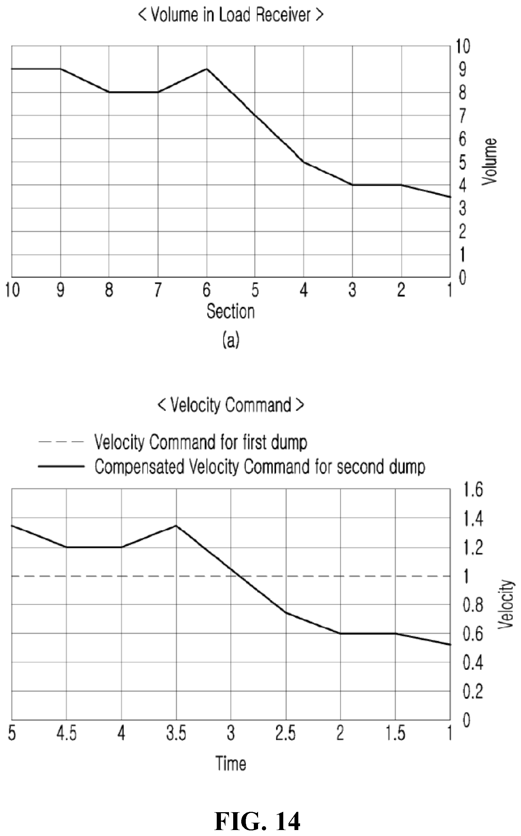

FIGS. 3 to 5 are flowcharts illustrating a method of controlling an excavator according to an exemplary embodiment; FIG. 6 is a diagram illustrating information of a load receiver required to perform an automatic dumping motion function according to an exemplary embodiment; FIGS. 7 and 8 are conceptual diagrams illustrating a movement trajectory of a bucket performing the automatic dumping motion function according to an exemplary embodiment; FIG. 9 is a diagram for explaining a step of calculating a dumping point according to an exemplary embodiment; FIG. 10 is a diagram for explaining a step of calculating a swing angle according to an exemplary embodiment; FIG. 11 is a diagram illustrating a target object loaded onto a load receiver after performing a first automatic dumping motion according to an exemplary embodiment; FIGS. 12(a) to (c) are diagrams for explaining a step of detecting, by section, a volume of a target object loaded onto a load receiver during a second automatic dumping motion according to an exemplary embodiment; FIGS. 13(a) to (c) are diagrams for explaining a step of determining a compensated value for a velocity command during the second automatic dumping motion according to an exemplary embodiment; and FIGS. 14(a) and (b) are diagrams illustrating a velocity command to which the compensated value has been applied according to an exemplary embodiment.

Referring to FIG. 3, a method (S2000) for controlling an excavator to automatically perform a dumping motion of a bucket for loading a target object includes: a step (S2100) of selecting and activating an automatic dumping motion function on the display controller (300); a step (S2200) of detecting a load receiver with the receiving unit (200) and acquiring information required to perform the automatic dumping motion; and a step (S2300) of performing a first automatic dumping motion by the controller (400) to load the target object contained in the bucket (150) onto the load receiver based on the acquired information.

In step S2100, when an automatic dumping motion function is selected in the display controller (300), the automatic dumping motion function is activated. For example, the driver may activate the automatic dumping motion function by selecting the automatic dumping motion function in the display controller (300).

In step S2200, the receiving unit (200) detects a load receiver on which an excavation target object is loaded, and acquires information required to perform the automatic dumping motion, for example, information on terrain including the target object, displacement and/or angle and/or position information of each driving unit (100), particularly information on the load receiver, and the like.

Referring to FIG. 6 and FIG. 7, the information on the load receiver (600) may include, for example, a shape of the load receiver (600), position coordinates (X1, Y1, Zd1) to (X4, Y4, Zd4) of a first corner (610) to a fourth corner (640) of the load receiver (600), position coordinates (Xd, Yd, Zd) of a center (650) of the load receiver (600), a length (Ld) and width (Lw) of the load receiver (600), a top height of the load receiver (600), an amount of the target object loaded inside the load receiver (600), and the like. Such information on the load receiver (600) may be acquired by the receiving unit (200), more specifically, by the environment perception sensor (230). The environment perception sensor (230) continuously detects the information until the automatic dumping motion function is deactivated.

In step S2300, the controller (400) performs a first automatic dumping motion to load the target object contained in the bucket (150) into the load receiver (600) based on the information acquired from the receiving unit (200). At this time, the automatic dumping motion function may be started by pushing a start button of the manipulation unit (500) by the driver.

Referring to FIG. 4 and FIGS. 7 to 10, the step of performing the first automatic dumping motion (S2300) includes detailed steps S2310, S2320, S2330, and S2340.

In step S2310, the controller (400) calculates, based on a center of a rotational axis of the bucket (150), a first dumping point (660) (Xd1, Yd1, Zr1), which is a dumping start position, and a second dumping point (670) (Xd2, Yd2, Zr2), which is a dumping completion position.

FIG. 7 illustrates the bucket (150) disposed above the load receiver (600) and the load receiver (600) into which the target object contained in the bucket (150) may be dumped. The receiving unit (200) senses a first height (Zd), which is a distance between the ground and an uppermost position of the load receiver (600), and the controller (400) sets a target value of a second height (Zt), which is a lowest height that the bucket (150) can reach, such that the second height (Zt) has a margin equal to or greater than a preset value (for example, 50 cm) relative to the first height (Zd). Accordingly, in a process of rotating the boom (130), boom-up may be performed until a difference value (Zm) between the second height (Zt) and the first height (Zd) reaches the preset value (for example, 50 cm) by sensing the second height (Zt) in real time.

In one embodiment, the controller (400) may determine a first dumping point (660) (Xd1, Yd1, Zr1), which is a dumping start position, and a second dumping point (670) (Xd2, Yd2, Zr2), which is a dumping completion position, based on at least one of the difference value (Zm) between the first height (Zd) and the second height (Zt), a length (Wb) of the bucket (150), and a center position of the load receiver (600). For example, as shown in FIG. 7, a lowest height to be reached by the bucket (150) may be determined such that a difference value (Zm) between the second height (Zt) and the first height (Zd) reaches a preset value (for example, 50 cm), and the Zr1 point of the first dumping point (660) and the Zr2 point of the second dumping point (670) may be determined by adding the length (Wb) of the bucket (150) at the determined lowest height so that the bucket (150) can sufficiently rotate by at least a preset angle (for example, 90 degrees) during a process of dumping the target object into the load receiver. In addition, the center position (650) (Xd, Yd) of the load receiver (600) in the X-axis direction and the Y-axis direction may be detected, and the Xd1 point and the Yd1 point of the first dumping point (660) and the Xd2 point and the Yd2 point of the second dumping point (670) may be determined such that the same are positioned according to the center position (650) (Xd, Yd) of the load receiver (600) or within a preset distance margin therefrom, thereby determining position coordinates of the first dumping point (660) and the second dumping point (670).

In one embodiment, referring to FIG. 7, when dumping a light material such as gravel, position coordinates (Xd1, Yd1, Zr1) of the first dumping point (660) may be determined based on at least one of Equation 1 and Equation 2 below, and position coordinates (Xd2, Yd2, Zr2) of the second dumping point (670) may be determined based on at least one of Equation 3 and Equation 4 below, but are not limited thereto. [Equation 1] $\begin{matrix}X 1 = Wb + Xm \\ Xd 1 = Xd - \left[\left(Ld/2\right)-X1\right] \\ Z 1 = Wb + Zm \\ Zr 1 = Max \left(Zd3,Zd4\right) + Z 1 \\ L 1 = abs \left(Xd-Xd1\right)\end{matrix}$ [Equation 2] $Yd 1 = Yd + Ym$ [Equation 3] $\begin{matrix}X 2 = \left(Ld/2\right) - Xm \\ Xd 2 = Xd + \left[X2-Wb*cos\left(θ\right)\right] \\ Z 2 = Wb + Zm \\ Zr 2 = Max \left(Zd1,Zd2\right) + Z 1 \\ L 2 = abs \left(Xd2-Xd\right)\end{matrix}$ [Equation 4] $Yd 2 = Yd + Ym$

Here, Xm, Ym, and Zm respectively represent a preset first margin, a preset second margin, and a preset third margin in the X-axis direction, the Y-axis direction, and the Z-axis direction, Wb represents a length of the bucket (150), Xd and Yd represent a center position of the load receiver (600) in the X-axis direction and the Y-axis direction, Zd1 to Zd4 represent positions of the first corner (610) to the fourth corner (640) of the load receiver (600) in the Z-axis direction, L1 represents a distance between the Xd point and the Xd1 point, and L2 represents a distance between the Xd point and the Xd2 point.

In another embodiment, referring to FIG. 8, when dumping a heavy material such as rock, Zr1 among position coordinates (Xd1, Yd1, Zr1) of the first dumping point (660) may be determined based on Equation 5 below, and Zr2 among position coordinates (Xd2, Yd2, Zr2) of the second dumping point (670) may be determined based on Equation 6 below, but are not limited thereto. [Equation 5] $\begin{matrix}Z 1 = Wb - Zm \\ Zr 1 = Max \left(Zd3,Zd4\right) + Z 1\end{matrix}$ [Equation 6] $\begin{matrix}Z 2 = Wb - Zm \\ Zr 2 = Max \left(Zd1,Zd2\right) + Z 1\end{matrix}$

Here, Xm, Ym, and Zm respectively represent a preset first margin, a preset second margin, and a preset third margin in the X-axis direction, the Y-axis direction, and the Z-axis direction, Wb represents a length of the bucket (150), Xd and Yd represent a center position of the load receiver (600) in the X-axis direction and the Y-axis direction, Zd1 to Zd4 represent positions of the first corner (610) to the fourth corner (640) of the load receiver (600) in the Z-axis direction, L1 represents a distance between the Xd point and the Xd1 point, and L2 represents a distance between the Xd point and the Xd2 point.

According to one embodiment, whether an excavation target object is a light material or a heavy material may be detected by the environment perception sensor (230). When the excavation target object is a heavy material, a dumping point in the Z-axis direction may be set low only during an initial dumping operation as illustrated in FIG. 8, and from a second dumping operation onward, dumping may be performed in the same manner as in a case where the excavation target object is a light material, as illustrated in FIG. 7.

Meanwhile, FIG. 9 illustrates a method of additionally calculating the first dumping point (660) (Xd1, Yd1, Zr1) and the second dumping point (670) (Xd2, Yd2, Zr2) in consideration of whether a dumping progress direction (X2) from the first dumping point (660) (Xd1, Yd1, Zr1) to the second dumping point (670) (Xd2, Yd2, Zr2) matches a longitudinal axis (X1) of the load receiver (600). Here, FIG. 9(a) illustrates a case in which directions of X1 and X2 match, as in FIG. 7 and FIG. 8, and FIGS. 9(b) and (c) illustrate cases in which the directions of X1 and X2 do not match.

Referring to FIGS. 9(b) and (c), when the directions of X1 and X2 do not match (θh > 0 or θh < 0), position coordinates (Xd1, Yd1) of the first dumping point (660) and position coordinates (Xd2, Yd2) of the second dumping point (670) may be additionally determined based on Equation 7, but are not limited thereto. [Equation 7] $\begin{matrix}Xd 1 = Xd + L 1 * sin \left(abs\left(θh\right)\right) \\ Yd 1 = Yd + \left(L1-L1*cos\left(abs\left(θh\right)\right)\right) \\ Xd 2 = Xd - L 2 * sin \left(abs\left(θh\right)\right) \\ Yd 2 = Yd - \left(L2-L2*cos\left(abs\left(θh\right)\right)\right)\end{matrix}$

In step S2320, the controller (400) establishes path planning of the boom (130), the arm (140), the bucket (150), and the upper swing body (120) from the first dumping point (Xd1, Yd1, Zr1) to the second dumping point (Xd2, Yd2, Zr2), including a velocity command. Here, the velocity command may be a speed for performing the dumping motion, and the controller (400) may determine the velocity command such that the dumping motion is performed at a constant speed, or may determine the velocity command such that the dumping motion is performed at different speeds for respective sections according to an amount of the target object loaded in the load receiver (600).

In step S2330, the controller (400) calculates, based on the established path planning, target rotation angles of one or more among the boom (130), the arm (140), and the bucket (150), and a target swing angle of the upper swing body (120).

The target rotation angles of one or more among the boom (130), the arm (140), and the bucket (150), and the target swing angle of the upper swing body (120) may be calculated through an inverse kinematics model. The inverse kinematics model refers to a model for calculating corresponding joint angles when a position and posture of an end portion are given.

FIG. 10 illustrates a method of calculating the target swing angle (θs) of the upper swing body (120) in a process in which the dumping motion proceeds from the first dumping point (660) to the second dumping point (670), according to one embodiment.

Referring to FIG. 10, when the position coordinates (Xd1, Yd1, Zr1) of the first dumping point (660) and the position coordinates (Xd2, Yd2, Zr2) of the second dumping point (670) are determined, the target swing angle (θs) of the upper swing body (120) may be determined based on Equation 8 below, but is not limited thereto. [Equation 8] $θs = atan \left(Xd2/Yd2\right) - atan \left(Xd1/Yd1\right)$

FIG. 11 illustrates a path for performing the first automatic dumping motion and a profile of the target object (T) loaded in the load receiver (600) after the first automatic dumping motion.

In step S2340, the controller (400) moves one or more among the boom (130), the arm (140), and the bucket (150), or swings the upper swing body (120) while moving one or more among the boom (130), the arm (140), and the bucket (150), to perform the automatic dumping motion function based on the target rotation angle and the target swing angle. At this time, according to one example, as illustrated in FIG. 11, a boom down operation, an arm out operation, a bucket out operation, and a swing operation of the upper swing body (120) may be performed to dump the target object (T) into the load receiver (600).

Meanwhile, the method (S2000) of controlling an excavator to automatically perform a dumping motion of a bucket for loading a target object may further include step S2400 of performing, by the controller (400), a second automatic dumping motion to evenly load the target object (T) in the load receiver (600) after the first automatic dumping motion.

Hereinafter, the second automatic dumping motion will be described mainly focusing on differences from the first automatic dumping motion with reference to FIG. 5 and FIGS. 11 to 14.

The step of performing the second automatic dumping motion (S2400) includes detailed steps S2410, S2420, S2430, and S2440.

In step S2410, the receiving unit (200), more specifically, the environment perception sensor (230), detects, for each section, a volume of the target object (T) loaded in the load receiver (600) by the first automatic dumping motion.

FIG. 12(a) illustrates detecting the target object (T) loaded in the load receiver (600) by dividing it into sections S1 to S10 in the X-axis direction according to one embodiment, and FIGS. 12(b) and (c) are diagrams illustrating, respectively in a table and a graph, a volume (VL(i)) of the target object (T) for each section. Here, the dumping motion proceeds in a direction from section S1 to section S10.

In step S2420, the controller (400) determines a compensated value (C(i)) for each section based on the detected volume (VL(i)) of the target object (T) for each section.

FIGS. 13(a) to (c) illustrate a process of determining the compensated value (C(i)) from the volume of the target object (T) for each section after the first automatic dumping motion, and determining a compensated velocity command (VCcom(i)) for each section in the second automatic dumping motion by applying the compensated value (C(i)) for each section to a velocity command (VC(i)) for each section in the first automatic dumping motion.

The compensated value (C(i)) is for compensating the velocity command (VC(i)) in the first automatic dumping motion to evenly load the target object (T) in the load receiver (600). According to one example, the compensated value (C(i)) may be determined by Equation 9 below, but is not limited thereto. [Equation 9] $C \left(i\right) = 1 - \frac{VL \left(i\right)}{VLaverage}$

In step S2430, the controller (400) calculates a compensated velocity command (VCcom(i)) for each section by applying the compensated value (C(i)) to the velocity command (VC(i)) in the first automatic dumping motion. According to one example, the compensated velocity command (VCcom(i)) may be determined by Equation 10 below, but is not limited thereto. [Equation 10] $VCcom \left(i\right) = \left(1-C\left(i\right)\right) ⋅ VC \left(i\right)$

In step S2440, the controller (400) establishes path planning of the boom (130), the arm (140), the bucket (150), and the upper swing body (120) from the first dumping point (660) to the second dumping point (670), including the compensated velocity command (VCcom(i)).

That is, when the target object (T) loaded in the load receiver (600) is divided into a plurality of sections, for a certain section, when a volume of the target object in the corresponding section is smaller than an average of volumes of the target objects in the respective sections, the compensated velocity command in the corresponding section may be configured to be smaller than the velocity command in the first automatic dumping motion, and when the volume of the target object in the corresponding section is greater than the average of the volumes of the target objects in the respective sections, the compensated velocity command in the corresponding section may be configured to be greater than the velocity command in the first automatic dumping motion.

Through such a process, unlike the first automatic dumping motion in which the dumping motion is performed with the same velocity command for each section in the load receiver, in the second automatic dumping motion, the dumping motion is performed with the compensated velocity command. Accordingly, the dumping motion may be performed relatively slowly in a section having a small volume of the target object, and relatively quickly in a section having a large volume of the target object, such that the target object is evenly loaded overall in the load receiver.

FIG. 14(a) is a diagram illustrating a volume of the target object in the load receiver for each section after the first automatic dumping motion, and FIG. 14(b) is a diagram comparing the velocity command in the first automatic dumping motion with the compensated velocity command in the second automatic dumping motion.

As illustrated in FIG. 14, unlike the first automatic dumping motion in which dumping is performed with a constant velocity command, in the second automatic dumping motion, dumping is performed with the compensated velocity command. It can be seen that, during the second dumping operation, in a section having a small volume of the target object, the compensated velocity command is smaller than the velocity command in the first dumping operation, and in a section having a large volume of the target object, the compensated velocity command is greater than the velocity command in the first dumping operation.

Meanwhile, the method (S2000) of controlling an excavator to automatically perform a dumping motion of a bucket for loading a target object may further include step S2500 of determining, by the controller (400), whether a center of a rotational axis of the bucket (150) has reached the second dumping point (670).

In step S2500, when it is determined that the center of the rotational axis of the bucket (150) has reached the second dumping point (670), the controller (400) displays, on the display controller (300), that the automatic dumping motion function has been completed. In addition, when it is determined that the center of the rotational axis of the bucket (150) has failed to reach the second dumping point (670) within a preset time, the controller (400) regards the same as an error and displays the same on the display controller (300), while performing the automatic dumping motion function until the center of the rotational axis of the bucket (150) reaches the second dumping point (670).

Meanwhile, when the driver no longer needs to use the automatic dumping motion function, the driver terminates the automatic dumping motion function through the display controller (300), thereby deactivating the automatic dumping motion function.

As described above, the method and system for controlling an excavator according to the present disclosure may improve work efficiency and driver convenience by automatically performing the dumping motion of the bucket for dumping the target object.

It should be understood that the present disclosure is not limited to the embodiments described above and illustrated in the drawings. Rather, those skilled in the art will recognize that many changes and modifications may be made within the scope of the present disclosure and the appended claims. In the drawings and the specification, aspects have been disclosed merely for purposes of illustration and not for purposes of limitation, and the scope of the inventive concept of the present disclosure is set forth in the following claims.

### Description of Reference Numerals

1000 System for controlling an excavator
100 Driving unit
110 Lower traveling body
120 Upper swing body
130 Boom
140 Arm
150 Bucket
200 Receiving unit
210 Inertial measurement units
220 Swing angle sensor
230 Environment perception sensor
400 Controller
500 Manipulation unit
600 Load receiver
610 First corner
620 Second corner
630 Third corner
640 Fourth corner
650 Center of load receiver
660 First dumping point
670 Second dumping point
VL Volume for each section in the load receiver
VLaverage Average of the volume for each section in the load receiver
C Compensated value
VC Velocity command in the first automatic dumping motion
VCcom Compensated velocity command in the second automatic dumping motion

## Claims

1. A method of controlling an excavator to automatically perform a dumping motion of a bucket for loading a target object, the method comprising:
a step for activating an automatic dumping motion function by selecting the automatic dumping motion function in a display controller;
a step for detecting, by a receiving unit, a load receiver and acquiring information required to perform the automatic dumping motion; and
a step for performing, by a controller, a first automatic dumping motion to load the target object contained in the bucket into the load receiver based on the acquired information.

2. The method of controlling an excavator according to claim 1, wherein
the performing of the first automatic dumping motion comprises:
a step for calculating, based on a center of a rotational axis of the bucket, a first dumping point (Xd1, Yd1, Zr1), which is a loading start position, and a second dumping point (Xd2, Yd2, Zr2), which is a loading completion position;
a step for establishing path planning of a boom, an arm, a bucket, and an upper swing body from the first dumping point (Xd1, Yd1, Zr1) to the second dumping point (Xd2, Yd2, Zr2), including a velocity command;
a step for calculating, based on the path planning, target rotation angles of one or more among the boom, the arm, and the bucket, and a target swing angle of the upper swing body; and
a step for moving one or more among the boom, the arm, and the bucket to perform the automatic dumping motion function based on the target rotation angles and the target swing angle, or swinging the upper swing body while moving one or more among the boom, the arm, and the bucket.

3. The method of controlling an excavator according to claim 2,
further comprising a step of performing, by the controller, a second automatic dumping motion after the first automatic dumping motion in order to evenly load the target object into the load receiver.

4. The method of controlling an excavator according to claim 3, wherein
the performing of the second automatic dumping motion comprises:
a step for detecting, by the receiving unit, a volume of the target object loaded in the load receiver by the first automatic dumping motion for each section;
a step for determining a compensated value for each section based on the detected volume of the target object for each section;
a step for calculating a compensated velocity command for each section by applying the compensated value to the velocity command in the first automatic dumping motion; and
a step for establishing path planning of the boom, the arm, the bucket, and the upper swing body from the first dumping point to the second dumping point, including the compensated velocity command.

5. The method of controlling an excavator according to claim 4, wherein,
for a certain section, when a volume of the target object in the corresponding section is smaller than an average of volumes of the target objects in the respective sections, the compensated velocity command in the corresponding section is smaller than the velocity command in the first automatic dumping motion, and when the volume of the target object in the corresponding section is greater than the average of the volumes of the target objects in the respective sections, the compensated velocity command in the corresponding section is greater than the velocity command in the first automatic dumping motion.

6. The method of controlling an excavator according to claim 5, wherein
a compensated value for each section, C(i), is determined through the following [Equation 1], and a compensated velocity command for each section, VCcom(i), is determined through the following [Equation 2]. [Equation 1] $C \left(i\right) = 1 - \frac{VL \left(i\right)}{VLaverage}$ [Equation 2] $VCcom \left(i\right) = \left(1-C\left(i\right)\right) VC \left(i\right)$
Here, VL(i) is a volume of the target object in section i, VLaverage is an average of the volumes of the target object in respective sections, and VC(i) is a velocity command in section i during the first automatic dumping motion.

7. The method of controlling an excavator according to claim 2, further comprising
a step for determining, by the controller, whether a center of a rotational axis of the bucket has reached the second dumping point.

8. The method of controlling an excavator according to claim 7, wherein,
in the step for determining of whether the center of the rotational axis of the bucket has reached the second dumping point,
when it is determined that the center of the rotational axis has reached the second dumping point within a preset time, the display controller displays that the automatic dumping motion function has been completed, and when it is determined that the center of the rotational axis has failed to reach the second dumping point within the preset time, the situation is regarded as an error and is displayed on the display controller, while the automatic dumping motion function is performed until the second dumping point is reached.

9. A system for controlling an excavator to automatically perform a dumping motion of a bucket for loading a target object, the system comprising:
a driving unit including a boom, an arm, a bucket, and an upper swing body;
a receiving unit configured to detect a load receiver and acquire information required to perform an automatic dumping motion function;
a display controller serving as an input/output interface for receiving user input or outputting information, the display controller being configured to activate the automatic dumping motion function and display the information acquired by the receiving unit; and
a controller configured to perform a first automatic dumping motion function by controlling the driving unit to load the target object contained in the bucket into the load receiver based on the acquired information.

10. The system for controlling an excavator according to claim 9, wherein
the controller is configured to:
calculate, based on a center of a rotational axis of the bucket, a first dumping point (Xd1, Yd1, Zr1), which is a loading start position, and a second dumping point (Xd2, Yd2, Zr2), which is a loading completion position;
establish path planning of the boom, the arm, the bucket, and the upper swing body from the first dumping point (Xd1, Yd1, Zr1) to the second dumping point (Xd2, Yd2, Zr2), including a velocity command;
calculate, based on the path planning, target rotation angles of one or more among the boom, the arm, and the bucket, and a target swing angle of the upper swing body; and
move one or more among the boom, the arm, and the bucket to perform the automatic dumping motion function based on the target rotation angles and the target swing angle, or swing the upper swing body while moving one or more among the boom, the arm, and the bucket.

11. The system for controlling an excavator according to claim 10, wherein
the controller is configured to
perform, after the first automatic dumping motion, a second automatic dumping motion to evenly load the target object in the load receiver.

12. The system for controlling an excavator according to claim 11, wherein:
the receiving unit is configured to
detect a volume of the target object loaded in the load receiver by the first automatic dumping motion for each section; and
the controller is configured to
determine a compensated value for each section based on the detected volume of the target object for each section,
calculate a compensated velocity command for each section by applying the compensated value to the velocity command in the first automatic dumping motion, and
establish path planning of the boom, the arm, the bucket, and the upper swing body from the first dumping point to the second dumping point, including the compensated velocity command.

13. The system for controlling an excavator according to claim 12, wherein,
for a certain section, when a volume of the target object in the corresponding section is smaller than an average of volumes of the target objects in the respective sections, the compensated velocity command in the corresponding section is smaller than the velocity command in the first automatic dumping motion, and when the volume of the target object in the corresponding section is greater than the average of the volumes of the target objects in the respective sections, the compensated velocity command in the corresponding section is greater than the velocity command in the first automatic dumping motion.

14. The system for controlling an excavator according to claim 13, wherein
a compensated value for each section, C(i), is determined through the following [Equation 1], and a compensated velocity command for each section, VCcom(i), is determined through the following [Equation 2]. [Equation 1] $C \left(i\right) = 1 - \frac{VL \left(i\right)}{VLaverage}$ [Equation 2] $VCcom \left(i\right) = \left(1-C\left(i\right)\right) ⋅ VC \left(i\right)$
Here, VL(i) is a volume of the target object in section i, VLaverage is an average of the volumes of the target object in respective sections, and VC(i) is a velocity command in section i during the first automatic dumping motion.
